Europäisches Patentamt

European Patent Office

Office européen des brevets

(19)

(11) **EP 0 901 658 B1**

(12) **EUROPÄISCHE PATENTSCHRIFT**

(45) Veröffentlichungstag und Bekanntmachung des Hinweises auf die Patenterteilung:
**02.08.2000 Patentblatt 2000/31**

(21) Anmeldenummer: **97924883.8**

(22) Anmeldetag: **14.05.1997**

(51) Int Cl.$^7$: **G06F 15/80**, G06F 7/00

(86) Internationale Anmeldenummer:
**PCT/DE97/00967**

(87) Internationale Veröffentlichungsnummer:
**WO 97/44743 (27.11.1997 Gazette 1997/51)**

(54) **VERFAHREN ZUR OPTIMIERUNG EINES FUZZY-REGELSATZES DURCH EINEN RECHNER**

PROCESS FOR OPTIMIZING FUZZY RULES USING A COMPUTER

PROCEDE D'OPTIMISATION D'UN ENSEMBLE DE REGLES FLOUES AU MOYEN D'UN ORDINATEUR

(84) Benannte Vertragsstaaten:
**DE FR GB IT**

(30) Priorität: **23.05.1996 DE 19620841**

(43) Veröffentlichungstag der Anmeldung:
**17.03.1999 Patentblatt 1999/11**

(73) Patentinhaber: **SIEMENS AKTIENGESELLSCHAFT**
**80333 München (DE)**

(72) Erfinder:
- **NEUNEIER, Ralf**
  **D-80469 München (DE)**
- **SIEKMANN, Stefan**
  **D-29320 Hermannsburg (DE)**
- **ZIMMERMANN, Hans-Georg**
  **D-82319 Starnberg (DE)**

(56) Entgegenhaltungen:
**WO-A-93/21598**

- **PROCEEDINGS OF ICNN 95 - INTERNATIONAL CONFERENCE ON NEURAL NETWORKS, PERTH, WA, AUSTRALIA, 27 NOV.-1 DEC. 1995, ISBN 0-7803-2768-3, 1995, NEW YORK, NY, USA, IEEE, USA, Seiten 606-611 vol.1, XP002039980 JUNHONG NIE ET AL: "A rule-based channel equalizer with learning capability"**
- **FUZZY SETS AND SYSTEMS, Bd. 71, Nr. 3, 12.Mai 1995, Seiten 345-357, XP000500970 SHANN J J ET AL: "A FUZZY NEURAL NETWORK FOR RULE ACQUIRING ON FUZZY CONTROL SYSTEMS"**
- **PROCEEDINGS OF IEEE 2ND INTERNATIONAL FUZZY SYSTEMS CONFERENCE, SAN FRANCISCO, CA, USA, 28 MARCH-1 APRIL 1993, ISBN 0-7803-0614-7, 1993, NEW YORK, NY, USA, IEEE, USA, Seiten 1402-1407 vol.2, XP000371605 BERENJI H R ET AL: "Clustering in product space for fuzzy inference"**
- **INTERNATIONAL CONFERENCE ON NEURAL NETWORKS/ WORLD CONGRESS ON COMPUTATIONAL INTELLIGENCE, ORLANDO, JUNE 27 - 29, 1994, Bd. 3, 27.Juni 1994, INSTITUTE OF ELECTRICAL AND ELECTRONICS ENGINEERS, Seiten 1743-1748, XP000503898 TAZAKI E ET AL: "A GENERATION METHOD FOR FUZZY RULES USING NEURAL NETWORKS WITH PLANAR LATTICE ARCHITECTURE"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Bei der Vorhersage von Zeitreihen oder auch bei der Modellierung von Prozessen mit Hilfe von neuronalen Netzen wird Expertenwissen oft ignoriert. Da aber in vielen Fällen Experten für das jeweilige Problemfeld zu finden sind, die in der Lage sind, ihr Wissen in Form von Fuzzy-Regeln auszudrücken, werden sogenannte Neuro-Fuzzy-Systeme zur Vorhersage von Zeitreihen oder zur Modellierung von Prozessen eingesetzt, wobei Fuzzy-Systeme und neuronale Netze mit ihren jeweiligen charakteristischen Eigenschaften miteinander kombiniert werden.

Dabei wird üblicherweise ein durch Regeln spezifiziertes Fuzzy-System in ein zu den Regeln äquivalentes neuronales Netz übersetzt und das neuronale Netz wird anhand von Trainingsdaten optimiert. Das optimierte neuronale Netz wird dann wiederum auf Fuzzy-Regeln abgebildet, wodurch Wissen über das nunmehr optimierte System für einen Experten extrahierbar ist. Dies wäre bei der ausschließlichen Verwendung von neuronalen Netzen nicht möglich.

Grundlagen über Neuro-Fuzzy-Systeme sind beispielsweise aus dem Dokument [1] bekannt.

Eine Übersicht über verschiedene Lernverfahren für neuronale Netze, beispielsweise überwachte Lernverfahren oder unüberwachte Lernverfahren sind aus dem Dokument [2] bekannt.

Verfahren zum Entfernen (Pruning) bzw. Wiederbeleben (Growing) von Gewichten und/oder Neuronen eines neuronalen Netzes sind beispielsweise aus dem Dokument [3] und dem Dokument [7] bekannt.

Ferner ist es aus dem Dokument [4] bekannt, für das Trainieren des neuronalen Netzes eines Neuro-Fuzzy-Systems semantikerhaltende Lernalgorithmen einzusetzen, damit die neuen Regeln des Fuzzy-Regelsatzes weiterhin korrekte und sinnvolle Aussagen treffen.

Weiterhin ist es aus dem Dokument [4] auch bekannt, bei der Optimierung des neuronalen Netzes eines Neuro-Fuzzy-Systems ganze Regeln des Regelsatzes zu entfernen.

Ferner ist auch ein sogenanntes Early-Stopping-Verfahren zum Entfernen bzw. Wiederbeleben der Gewichte und/oder Neuronen eines neuronalen Netzes aus dem Dokument [5] bekannt.

In [6] ist eine Übersicht über Optimierung von Fuzzy-Control mit Hilfe Neuronaler Netze beschrieben.

Aus [8] ist eine Übersicht bekannt über den Aufbau von Regeln und die Transformation der Regeln in neuronale Netze.

Das Entfernen ganzer Regeln in einem Fuzzy-Regelsatz weist den Nachteil auf, daß die Granularität der Optimierung des Fuzzy-Regelsatzes sehr grob ist. Aus diesem Grunde ist die Genauigkeit der erhaltenen Fuzzy-Regelsätze relativ gering. Auch die mit dem optimierten Fuzzy-Regelsatz erzielten Ergebnisse sind mit diesem bekannten Verfahren ungenau.

Somit liegt der Erfindung das Problem zugrunde, ein Verfahren zur Optimierung eines Fuzzy-Regelsatzes anzugeben, welches einen aussagekräftigeren, besser optimierten Fuzzy-Regelsatz ergibt, als das mit den bekannten Verfahren möglich ist.

Das Problem wird durch das Verfahren gemäß Patentanspruch 1 gelöst.

Bei diesem Verfahren, welches mit einem Rechner durchgeführt wird, wird ein Fuzzy-Regelsatz auf ein neuronales Netz abgebildet. Das neuronale Netz wird trainiert und anschließend werden für das trainierte neuronale Netz Gewichte und/oder Neuronen des trainierten neuronalen Netzes entfernt und/oder wiederbelebt. Ein auf diese Weise gebildetes neues neuronale Netz wird in einem letzten Schritt auf einen neuen Fuzzy-Regelsatz abgebildet.

Durch die Berücksichtigung einzelner Gewichte und/oder Neuronen bei der Entfernung bzw. Wiederbelebung innerhalb des neuronalen Netzes wird eine höhere Granularität bei der Veränderung der einzelnen Regeln des Fuzzy-Regelsatzes durch das Entfernen bzw. Wiederbeleben von Elementen des neuronalen Netzes erreicht. Die Granularität wird in einer Weise erhöht, daß nicht nur lediglich ganze Regeln aus dem Fuzzy-Regelsatz entfernt werden, sondern daß einzelne Prämissen der Regeln des Fuzzy-Regelsatzes entfernt bzw. hinzugefügt werden können. Dadurch wird die Aussagekraft und Verläßlichkeit und damit die erzielten Ergebnisse des Neuro-Fuzzy-Systems erheblich erhöht.

Vorteilhafte Weiterbildungen des erfindungsgemäßen Verfahrens ergeben sich aus den abhängigen Ansprüchen.

Es ist vorteilhaft, das Verfahren iterativ solange durchzuführen, bis ein für das jeweils aktuelle neuronale Netz ermittelter Fehler unter einer vorgebbaren Schranke liegt. Dadurch wird es möglich, zum einen eine Bewertung des jeweils gebildeten neuronalen Netzes und des daraus ermittelten neuen Fuzzy-Regelsatzes zu bilden und zum anderen die "Qualität" des jeweils neuen Fuzzy-Regelsatzes in einer Weise zu steuern, daß sie eine vorgebbare Qualität erreicht.

Ferner ist es vorteilhaft, die Struktur des neuronalen Netzes in einer Weise auszugestalten, daß mit den Gewichten des neuronalen Netzes die Prämissen der Regeln beschrieben werden. Dadurch wird die Entfernung bzw. das Wiederbeleben von Prämissen der Regeln schon durch Entfernen bzw. Wiederbeleben der Gewichte des neuronalen Netzes ermöglicht. Eine weitere Vereinfachung bei der Optimierung des Fuzzy-Regelsatzes wird dadurch erreicht, daß die Prämissen der Regeln mit den Gewichten des neuronalen Netzes binär codiert werden. Damit wird eine sehr einfache, für die Optimierung des Fuzzy-Regelsatzes übersichtliche und mit geringerem Rechenaufwand verbundene Optimierung des Regelsatzes möglich.

Zur weiteren Steigerung der Verläßlichkeit des optimierten Fuzzy-Regelsatzes ist es vorteilhaft, einen semantikerhaltenden Lernalgorithmus einzusetzen. Dadurch wird gewährleistet, daß die Semantik der Regeln sich nicht verändert und somit weniger Widersprüche bei den Regeln entstehen.

Ferner ist es zur Vereinfachung und zur damit verbundenen Rechenzeiteinsparung bei der Durchführung des Verfahrens mit Hilfe des Rechners vorteilhaft, neue Regeln, welche die gleiche Aussage treffen, also dieselbe Semantik aufweisen, zu einer Regel zusammenzufassen. Ein jeder Regel zugeordneter Verläßlichkeitswert wird in diesem Fall aus der Summe der Verläßlichkeitswerte der Regeln, die zu der neuen Regel zusammengefaßt werden, gebildet.

Zwei Ausführungsbeispiele der Erfindung sind in den Figuren dargestellt und werden im weiteren näher erläutert.

Es zeigen

Fig. 1 ein Blockdiagramm, in dem das Prinzip eines Neuro-Fuzzy-Systems dargestellt ist;

Fig. 2 ein Ablaufdiagramm, in dem einzelne Verfahrensschritte des ersten Ausführungsbeispiels dargestellt sind;

Fig. 3 eine Skizze eines 4-schichtigen neuronalen Netzes, dessen Topologie vorteilhaft in dem Verfahren eingesetzt werden kann;

Fig. 4 eine Skizze einer binären Prämissenmatrix, die der Topologie des neuronalen Netzes aus Fig. 3 entspricht;

Fig. 5 ein Ablaufdiagramm, in dem die einzelnen Verfahrensschritte des Verfahrens dargestellt sind;

Fig. 6 eine Skizze eines Rechners, mit dem das Verfahren durchgeführt wird.

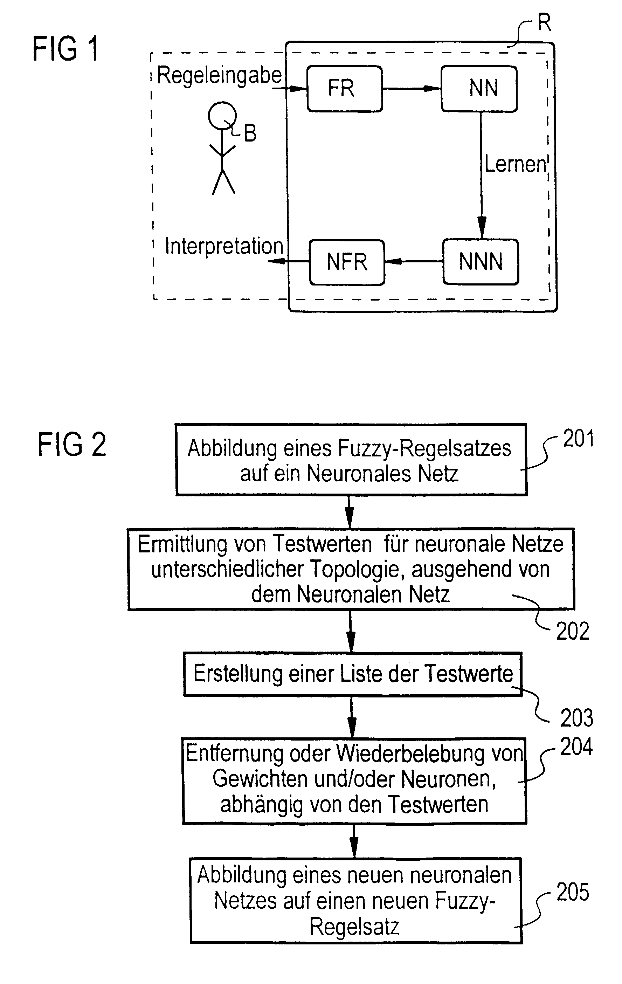

In Fig. 1 ist das Prinzip eines Neuro-Fuzzy-Systems in Form einer Skizze dargestellt. Ein Benutzer B gibt Regeln $R_i$, die jeweils eine Anwendung beschreiben, in einen Rechner R ein. Die Regeln $R_i$ bilden einen zu optimierenden Fuzzy-Regelsatz FR. Der Fuzzy-Regelsatz FR wird auf ein neuronales Netz NN abgebildet, welches durch beliebige Trainingsverfahren und möglicherweise zusätzliche Verfahren zum Entfernen und/oder Wiederbeleben von Gewichten $w_i$ und/oder Neuronen NE des neuronalen Netzes NN zu einem neuen neuronalen Netz NNN optimiert wird. Das neue neuronale Netz NNN wird auf einen neuen Fuzzy-Regelsatz NFR abgebildet. Der neue Fuzzy-Regelsatz NFR wird von dem Benutzer B in einem letzten Schritt interpretiert. Dadurch können auf einfache Weise Informationen über das optimierte Neuro-Fuzzy-System von dem Benutzer B extrahiert werden.

Der Benutzer B gibt, wie oben beschrieben, die Regeln $R_i$, die den Fuzzy-Regelsatz FR bilden, in den Rechner R ein. Die Regeln $R_i$, wobei i eine beliebige natürliche Zahl zwischen 1 und n ist und jede Regel eindeutig identifiziert, und n eine Anzahl von Regeln $R_i$ innerhalb des Fuzzy-Regelsatzes FR beschreibt, weist beispielsweise folgende, allgemein formulierte Form auf:

| Regel $R_i$ | |
|---|---|
| Prämisse | IF $x_1$ = a and $x_2$ = b |
| Konklusion | THEN l = c WITH BELIEF d. |

Hierbei werden mit a und b beliebige Werte von Prämissenvariablen $x_1$, $x_2$ bezeichnet. Dieses einfache Beispiel schränkt eine beliebige Anzahl von Prämissen in einer Regel $R_i$ in keinster Weise ein, sondern soll den allgemeinen Aufbau einer Regel lediglich übersichtlich darstellen.

Die Anzahl n von Regeln $R_i$ sowie die Anzahl von Prämissen innerhalb der Regel $R_i$ sind beliebig. Mit 1 wird eine Konklusionsvariable der jeweiligen Regeln $R_i$ beschrieben. Ein Wert c der Konklusionsvariable l beschreibt jeweils den Ausgangswert der Regel $R_i$, wenn alle Prämissen der Regel $R_i$ zutreffen. Ferner ist jeder Regel $R_i$ ein Verläßlichkeitswert $\kappa_i$ zugeordnet. In dem oben beschriebenen allgemeinen Fall weist der Verläßlichkeitswert $\kappa_i$ den speziellen Wert d auf.

Der Fuzzy-Regelsatz FR wird auf das neuronale Netz NN abgebildet. Das kann beispielsweise in einer Weise erfolgen, daß jede Regel $R_i$ einer Aktivierungsfunktion $b_i(\underline{x})$ eines Neurons NE in einer versteckten Schicht des neuronalen Netzes NN entspricht. Dies bedeutet in diesem Fall, daß die Anzahl von Neuronen NE in einer versteckten Schicht des neuronalen Netzes NN der Anzahl von Regeln $R_i$ im Fuzzy-Regelsatz FR entspricht. Ein Ausgabewert y ($\underline{x}$) des neuronalen Netzes NN für einen gegebenen Eingabewert $\underline{x}$, der im obigen Beispiel sich ergibt aus einem Vektor mit den einzelnen Komponenten $x_1$ und $x_2$, ergibt sich beispielsweise aus einem gewichteten Mittelwert aller Konklusionen aller Neuronen NE der versteckten Schicht des neuronalen Netzes NN. Gewichtsfaktoren, im weiteren als Gewichte $w_i$ bezeichnet, der Neuronen NE in dem neuronalen Netz NN sind beliebig vorgebbar und werden in dem weiteren Optimierungsschritt des neuronalen Netzes NN optimiert. Es ergibt sich für den Ausgabewert $y(\underline{x})$ des neuronalen Netzes NN beipielsweise folgende Vorschrift:

$$y(\underline{x}) = \frac{\sum_{i=1}^{n} w_i \cdot b_i(\underline{x})}{\sum_{i=1}^{n} b_i(\underline{x})} \qquad (1).$$

Die Aktivierungsfunktion $b_i(\underline{x})$ ergibt sich beispielsweise jeweils nach folgender Vorschrift:

$$b_i(\underline{x}) = \kappa_i \cdot \prod_j MF_{ij}(\underline{x}_j) \qquad (2).$$

Die linguistischen Ausdrücke der Regel $R_i$ des Fuzzy-RegelSatzes FR werden üblicherweise durch eindimensionale Zugehörigkeitsfunktionen $MF_{ij}(\underline{x}_j)$ realisiert. Hierbei wird mit einem Index j die Anzahl von Eingangsgrößen der Neuronen, in diesem Zusammenhang auch die Anzahl der Prämissen in der jeweiligen Regel $R_i$ bezeichnet. Es sind verschiedenste Formen von Zugehörigkeitsfunktionen $MF_{ij}(\underline{x}_j)$ bekannt und können in diesem Verfahren ohne Einschränkungen eingesetzt werden. Zur besseren Darstellbarkeit wird jedoch im weiteren die Zugehörigkeitsfunktion $MF_{ij}(\underline{x}_j)$ als eine gaußförmige Funktion angenommen, die durch Zentren $\mu_{ij}$ und Varianzen $\sigma_{ij}$ parametrisiert werden.

Ferner wird vereinfachend angenommen, daß die Konklusion jeweils durch eine vorgebbare Konstante gegeben ist. Für diesen einfachen, hier beispielhaft dargelegten Fall ergibt sich für die Aktivierungsfunktion $b_i(\underline{x})$ eine typische normalisierte radiale Basisfunktion und somit ein neuronales Netz NN, welches normalisierte radiale Basisfunktionen als Aktivierungsfunktion $b_i(\underline{x})$ enthält. Es ergibt sich eine Vorschrift zur Bildung der Aktivierungsfunktion $b_i(\underline{x})$ für diesen Spezialfall auf folgende Weise:

$$b_i(\underline{x}) = \kappa_i \cdot \prod_j MF_{ij}(\underline{x}_j) = \kappa_i \cdot e^{-0,5 \cdot \left( \sum_j \frac{\underline{x}_j - \mu_{ij}}{\sigma_{ij}} \right)^2} \qquad (3).$$

Der Verläßlichkeitswert $\kappa_i$ ist ein Maß, mit dem beschrieben wird, wie verläßlich die jeweilige Regel $R_i$ ist. Der Verläßlichkeitswert $\kappa_i$ ist üblicherweise eine positive Zahl. Ist der Verläßlichkeitswert $\kappa_i$ gleich 0, so bedeutet das, daß die gesamte Regel $R_i$, die durch die Aktivierungsfunktions $b_i(\underline{x})$ beschrieben wird, entfernt wurde.

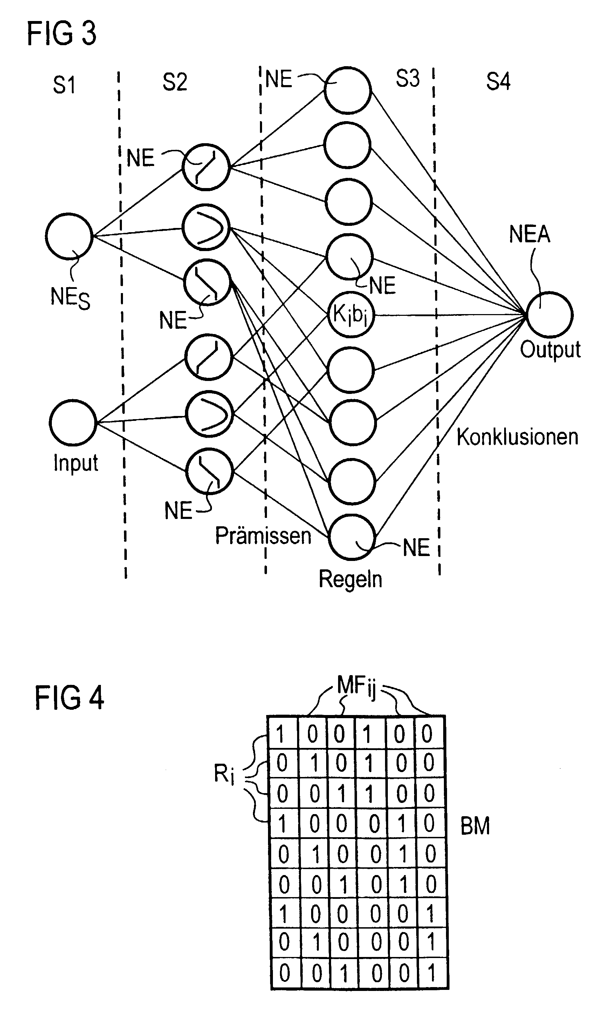

In dem ersten Ausführungsbeispiel des Verfahrens wird nun nach der Abbildung der Regel $R_i$ auf das neuronale Netz NN 201 (vgl. Fig. 2) eine vorgebbare Anzahl von Testwerten $\Delta_k$ für verschiedene Topologien k ausgehend von dem neuronalen Netz NN gebildet 202. Die verschiedenen Topologien k werden beispielsweise durch Weglassen oder Hinzugüen einzelner Prämissen von dem neuronalen Netz NN gebildet.

Die Ermittlung der Testwerte $\Delta_k$ kann beispielsweise folgendermaßen erfolgen. Anhand von Trainingsdaten, welche eine beliebige Anzahl von Tupeln $(\underline{z}_1,..., \underline{z}_m | t_1,..., t_m)$ enthalten, wobei mit $\underline{z}_1,..., \underline{z}_m$ jeweils Eingabedaten des neuronalen Netzes NN beschrieben werden, die entsprechend zu bekannten Ergebniswerten $t_1,..., t_m$ führen. Die Tupel $(\underline{z}_1,..., \underline{z}_m | t_1,..., t_m)$, die im weiteren als Trainingsdaten $(\underline{z}_1,..., \underline{z}_m | t_1,..., t_m)$ bezeichnet werden, bilden einen Trainingsdatensatz des neuronalen Netzes NN. Mit m wird die Anzahl der Trainingsdaten für ein erstes Ausführungsbeispiel bezeichnet. Mit $\Theta$ wird ein Parametervektor bezeichnet, der die jeweilige Zugehörigkeitsfunktion $MF_{ij}(\underline{x}_j)$ beschreibt. Es wird ein Fehler $E(\underline{z}_1,..., \underline{z}_m, \Theta)$ für die Trainingsdaten mit den jeweils aktuell geltenden Regeln $R_i$ und den Zugehörigkeitsfunktionen $MF_{ij}(\underline{x}_j)$ ermittelt.

Die Ermittlung des Fehlers $E(\underline{z}_1,..., \underline{z}_m, \Theta)$ erfolgt beispielsweise nach folgender Vorschrift:

$$E\left(\underline{z}_1, \ldots, \underline{z}_m, \Theta\right) = \sum_{P=1}^{m} \left| \underline{z}_p - y\left(\underline{z}_p\right) \right| \qquad (4).$$

Mit einem Laufindex p wird jeweils ein in der Summe berücksichtigtes Trainingsdatum $z_p$ mit dem Zieldatum $t_p$ und einem tatsächlichen Ausgabewert $y(\underline{z}_p)$ des neuronalen Netzes NN bezeichnet.

Es wird in einem iterativen Verfahren eine beliebige Anzahl von Testwerten $\Delta_k$ ermittelt, indem jeweils eine beliebige Anzahl von Prämissen bzw. Regeln $R_i$ weggelassen oder hinzugefügt wird. Für die jeweils neu entstandenen Topologien des neuronalen Netzes NN und somit neu entstandenen Fuzzy-Regelsätzen NFR wird jeweils ein Testwert $\Delta_k$ auf folgende Weise ermittelt:

$$\Delta_k = \left( \sum_{p=1}^{m} \left| \underline{t}_p - y_k\left(\underline{z}_p\right) \right| \right) - E\left(\underline{z}_1, \ldots, \underline{z}_m, \Theta\right) \qquad (5).$$

Bei jeder Änderung der Topologie k des neuronalen Netzes NN durch Veränderung des Fuzzy-Regelsatzes FR ergibt sich allgemein ein Ausgabewert $y_k(\underline{x})$ zu der jeweiligen Topologie k des neuronalen Netzes NN:

$$y_k(\underline{x}) = \frac{\sum_{i=1}^{n} w_i \cdot b_{i,k}(\underline{x})}{\sum_{i=1}^{n} b_{i,k}(\underline{x})} \qquad (6).$$

Die jeweiligen Aktivierungsfunktionen $b_{i,k}(\underline{x})$ zu der jeweiligen Topologie k ergeben sich zu:

$$b_{i,k}(\underline{x}) = \kappa_i \cdot \prod_{j \neq k} MF_{ij}\left(\underline{x}_j\right) \qquad (7).$$

Dies gilt für jede Topologie $k \in \{MF_{ij}(\underline{x}_j) \mid i, j\}$.

Das Ergebnis ist eine in dem Rechner R gespeicherte Liste von Testwerten $\Delta_k$, die jeweils den Einfluß von spezifischen Änderungen an dem Fuzzy-Regelsatz FR beschreiben, die durch Entfernen bzw. Hinzufügen von Prämissen bzw. von ganzen Regeln $R_i$ auf den gesamten Fehler $E(\underline{z}_1, \ldots, \underline{z}_m, \Theta)$ verursacht werden, den das neuronale Netz NN bei dem Trainingsdatensatz jeweils aufweist 203.

Es wird eine vorgebbare Anzahl, beispielsweise ein Prozentsatz von Gewichten $w_i$ und/oder Neuronen NE, die relativ den geringsten Einfluß auf die Änderung des Fehlers $E(\underline{z}_1, \ldots, \underline{z}_m, \Theta)$ des neuronalen Netzes NN besitzen, entfernt, bzw. hinzugefügt 204.

In einem letzten Schritt wird das auf die im vorigen beschrebene Weise gebildete neue neuronale Netz NNN auf den neuen Fuzzy-Regelsatz NFR abgebildet 205.

Das neue neuronale Netz NNN mit seiner neuen Topologie wird in einer Weiterbildung des Verfahrens beispielsweise entweder wiederum trainiert auf einem weiteren Trainingsdatensatz oder das oben beschriebene Verfahren kann von vorne mit dem neuen neuronalen Netz NNN als neuronales Netz NN der nächsten Iteration durchgeführt werden.

Anschaulich dargestellt bedeutet diese Vorgehensweise, daß Prämissen, die bezüglich des Fehlers $E(\underline{z}_1, \ldots, \underline{z}_m, \Theta)$ des neuronalen Netzes NN für den Trainingsdatensatz einen geringen Informationsgehalt aufweisen, entfernt werden. Prämissen mit einem hohen Informationsgehalt bezüglich des Fehlers $E(\underline{z}_1,..., \underline{z}_m, \Theta)$ des neuronalen Netzes NN für den Trainingsdatensatz dagegen bleiben in der Struktur des neuen neuronalen Netzes NNN sowie in dem neuen, optimierten Fuzzy-Regelsatz NFR weiter enthalten.

In Fig. 3 ist ein neuronales Netz NN mit einer 4-schichtigen Topologie dargestellt. Anhand der 4-schichtigen Topologie wird ein zweites Ausführungsbeispiel des Verfahrens erläutert.

Eine Eingabeschicht S1 mit Eingangsneuronen $NE_S$, wobei mit s die Anzahl der Eingangsneuronen $NE_S$ bezeichnet wird und s eine beliebige natürliche Zahl ist, werden die Eingangsvariablen des neuronalen Netzes NN beschrieben.

In einer zweiten Schicht S2 des neuronalen Netzes NN werden in diesem Ausführungsbeispiel direkt die Zugehörigkeitsfunktionen $MF_{ij}(\underline{x}_j)$ beschreiben. Das bedeutet, daß zu jeder Zugehörigkeitsfunktion $MF_{ij}(\underline{x}_j)$ jeweils ein Neuron NE in der zweiten Schicht S2 vorgesehen ist. Die Regeln $R_i$ werden auf jeweils ein Neuron NE einer dritten Schicht S3 eindeutig abgebildet. Ferner ist eine Ausgabeschicht S4, die in diesem einfachen Beispiel lediglich ein Ausgabeneuron NEA aufweist, dargestellt.

Bei der Transformation der Regeln $R_i$ des Fuzzy-Regelsatzes FR auf die 4-schichtige Topologie des neuronalen Netzes NN werden folgende Aspekte beachtet:

- jede Regel $R_i$ wird eindeutig auf ein Neuron NE der dritten Schicht S3 des neuronalen Netzes NN abgebildet;

- jede Zugehörigkeitsfunktion $MF_{ij}(\underline{x}_j)$ wird eindeutig auf ein Neuron NE in der zweiten Schicht S2 des neuronalen Netzes NN abgebildet,

- Gewichte $w_i$ der Verbindungen zwischen Eingangsneuronen $NE_S$ und den Neuronen NE der zweiten Schicht S2 werden durch den Parameter $\sigma_{ij}$ der entsprechenden Zugehörigkeitsfunktion $MF_{ij}(\underline{x}_j)$ für den Spezialfall einer gaußförmigen Zugehörigkeitsfunktion $MF_{ij}(\underline{x}_j)$ durch die Varianz $\sigma_{ij}$, bestimmt. Außerdem wird der Parameter $\mu_{ij}$, bei einer gaußförmigen Zugehörigkeitsfunktion $MF_{ij}(\underline{x}_j)$ das Zentrum $\mu_{ij}$ der gaußförmigen Zugehörigkeitsfunktion $MF_{ij}(\underline{x}_j)$, der jeweils einen negativen Bias darstellt gespeichert, da dieser Wert von dem jeweils anliegenden Eingabesignal subtrahiert wird;

- eine Verbindung eines Neurons NE der zweiten Schicht S2 zu einem Neuron NE der dritten Schicht S3 existiert genau dann, wenn die Zugehörigkeitsfunktion $MF_{ij}(\underline{x}_j)$ in der Prämisse der Regel $R_i$ auch tatsächlich vorkommt, ansonsten gilt für die Verbindung der Wert 0

Wie in Fig. 4 dargestellt ist, führt diese Art der Transformation dazu, daß die Verbindungen zwischen den Neuronen NE der zweiten Schicht S2 und der Neuronen NE der dritten Schicht S3 durch eine binäre Matrix BM dargestellt werden können. In der binären Matrix BM werden die Regeln $R_i$ des Fuzzy-Regelsatzes FR in jeweils einer Zeile der binären Matrix BM aufgetragen. In den Spalten werden die einzelnen Zugehörigkeitsfunktionen $MF_{ij}(\underline{x}_j)$ eingetragen. Eine 1 in der binären Matrix BM bedeutet in diesem Zusammenhang, daß die Verbindung zwischen dem jeweiligen Neuron NE der zweiten Schicht S2, der einer entsprechenden Zugehörigkeitsfunktion $MF_{ij}(\underline{x}_j)$ entspricht, und dem jeweiligen Neuron NE der dritten Schicht S3, das eine Prämisse der jeweiligen Regel $R_i$ beschreibt, besteht.

Anschaulich bedeutet dies, daß mit dem Wert 1 in der binären Matrix BM angegeben wird, daß die jeweilige Prämisse in der Regel $R_i$ berücksichtigt wird und der Wert 0, daß die jeweilige Prämisse in der Regel $R_i$ nicht berücksichtigt wird.

Durch die hier dargestellte 4-schichtige Topologie des neuronalen Netzes NN ist es möglich, das Verfahren auf sehr einfache Weise durchzuführen, wodurch der Rechenzeitbedarf zur Durchführung des Verfahrens durch einen Rechner weiter reduziert wird. Ferner können die in diesem Zusammenhang verwendeten Verfahren zum Entfernen bzw. Wiederbeleben von Gewichten $w_i$ und/oder Neuronen NE frei ausgewählt werden.

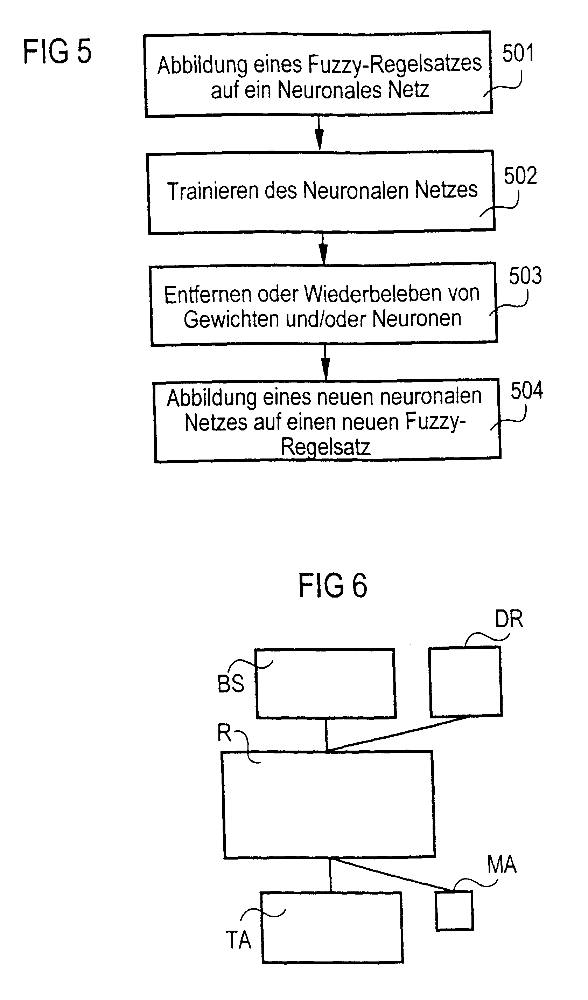

In Fig. 5 ist in Form eines Ablaufdiagramms das Verfahren mit seinen Verfahrensschritten dargestellt.

Der Fuzzy-Regelsatz FR wird auf das neuronale Netz NN abgebildet 501.

Das neuronale Netz NN wird mit einem beliebigen Lernverfahren, beispielsweise einem Gradientenabstiegsverfahren (z. B. das Backpropagation-Verfahren) trainiert 502. Eine Übersicht über verschiedene Lernverfahren eines neuronalen Netzes sind in dem Dokument [2] zu finden.

Für das nunmehr trainierte neuronale Netz NN werden in einem weiteren Schritt 503 Gewichte $w_i$ und/oder Neuronen NE des trainierten neuronalen Netzes NN entfernt oder wiederbelebt. Es können hierbei beliebige Verfahren zum Entfernen bzw. Wiederbeleben eingesetzt werden. Eine Übersicht über solche Verfahren ist in dem Dokument [3] dargestellt. Ferner ist auch ein sogenanntes Early-Stopping-Verfahren zum Entfernen bzw. Wiederbeleben der Gewichte $w_i$ und/oder Neuronen NE des neuronalen Netzes NN einsetzbar. Dieses Verfahren ist in dem Dokument [5] beschrieben.

Durch Entfernen bzw. Wiederbeleben von Gewichten $w_i$ und/oder Neuronen NE des neuronalen Netzes NN wird ein neues neuronales Netz NNN gebildet.

Das neue neuronale Netz NNN wird auf den neuen Fuzzy-Regelsatz NFR abgebildet. Dabei wird der neue Fuzzy-Regelsatz NFR durch das neue neuronale Netz NNN charakterisiert 504.

In einer Weiterbildung des Verfahrens ist es vorteilhaft, beispielsweise den Fehler $E(z_1,..., z_m, \Theta)$ nach der oben beschriebenen Vorschrift (4) zu bestimmen und zu überprüfen, ob der Fehler $E(z_1,..., z_m, \Theta)$ kleiner ist als eine vorgebbare Schranke, mit der eine gewünschte Qualität des optimierten Fuzzy-Regelsatzes NFR angegeben wird.

Ist dies der Fall, kann bei dieser Weiterbildung davon ausgegangen werden, daß die Qualität des optimierten neuronalen Netzes, also dem neuen neuronalen Netz NNN entsprechend der Vorgabe durch die Schranke ausreichend ist. Ist jedoch der Fehler $E(z_1,..., z_m, \Theta)$ größer als die vorgebbare Schranke, so muß das neue neuronale Netz NNN weiter optimiert werden, was durch eine iterative Durchführung des oben beschriebenen Verfahrens erreicht wird. In der binären Matrix BM, die in Figur 4 dargestellt ist, ist ein einfaches Beispiel angenommen, bei der zwei Eingangsvariablen $x_1$ und $x_2$ mit jeweils drei möglichen Werten angenommen wird. Dies schränkt jedoch die allgemeine Verwendbarkeit dieser prinzipiellen Vorgehensweise in keinster Weise ein. Sowohl die Anzahl der Eingangswerte für das neuronale Netz NN als auch die Anzahl der Werte, die die Eingangsvariablen $x_1$ und $x_2$ annehmen können, ist beliebig.

In einer Weiterbildung des Verfahrens ist es vorgesehen, einen sogenannten semantikerhaltenden Lernalgorithmus zur Optimierung des neuronalen Netzes NN zu verwenden. Der semantikerhaltende Lernalgorithmus ist beispielsweise in dem Dokument [4] beschrieben. Da durch Änderung der Regeln $R_i$ durch das Entfernen bzw. Wiederbeleben von Gewichten $w_i$ und/oder Neuronen NE neue Regeln $R_i$ mit denselben Prämissen und denselben Konklusionen entstehen können, ist es in einer Weiterbildung des Verfahrens vorteilhaft, "gleiche" neue Regeln $R_i$ zu einer Regel $R_i$ zusammenzufassen, und den Verläßlichkeitswert $\kappa_i$ der jeweiligen Regel $R_i$, die sich aus der Zusammenfassung mehrerer gleicher Regeln $R_i$ ergibt, aus der Summe der Verläßlichkeitswerte $\kappa_i$ der zusammengefaßten Regeln $R_i$ zu bilden.

In Fig. 6 ist der Rechner R in Form einer Skizze dargestellt, mit dem das Verfahren durchgeführt wird. Der Rechner R weist zusätzlich beispielsweise eine Tastatur TA, eine Maus MA als Eingabemittel zur Eingabe des Fuzzy-Regelsatzes FR durch den Benutzer B sowie beispielsweise einen Drucker DR oder einen Bildschirm BS zur Darstellung des neuen Fuzzy-Regelsatzes NFR für den Benutzer B auf.

In diesem Dokument folgende Veröffentlichungen zitiert:

[1] R. Kruse et al, Neuronale Fuzzy-Systeme, Spektrum der Wissenschaft, S. 34-41, Juni 1995

[2] J. Hertz et al, Introduction to the Theory of Neural Computation, Lecture Notes Volume I, Addison Wesley Publishing Company, ISBN 0-201-51560-1, 1995

[3] C. Bishop, Neuronal Networks for Pattern Recognition, Clarendon Press, Oxford, ISBN 0-198-538-642, S. 353 - 364, 1995

[4] R. Neuneier und H. G. Zimmermann, A Semantic-Preserving Learning Algorithm for Neuro-Fuzzy-Systems with Applications to Time Series prediction, Proceedings of the ICANN-Workshop "Banking, Finance and Insurance", Paris, S. 1 - 5, 1995

[5] W. Finnoff et al, Improving generalization by Nonconvergent Model Selection Methods, Neural Networks, Nr. 6, 1992

[6] H. Hensel et al, Optimierung von Fuzzy-Control mit Hilfe Neuronaler Netze, atp, Automatisierungstechnische Praxis, Vol. 37, Nr. 11, S. 40 - 48, 1995

[7] A. Gail et al, Rule Extraction: From Neural Architecture to Symbolic Representation, Connection Science, Vol. 7, No. 1, S. 3 - 27, 1995

[8] J. Hollatz, Integration von regelbasiertem Wissen in neuronale Netze, Dissertation Institut für Informatik, Technische Universität München, S. 35 - 58, 1993

**Patentansprüche**

1. Verfahren zur Optimierung eines vorgegebenen Fuzzy-Regelsatzes, der eine beliebige Anzahl von Regeln aufweist, durch einen Rechner,

a) bei dem der Fuzzy-Regelsatz (FR) auf ein Neuronales Netz (NN) abgebildet wird (501), wobei

- jeweils ein Neuron (NE) des Neuronalen Netzes (NN) eine Regel des Fuzzy-Regelsatzes beschreibt, und
- jeweils ein Gewicht ($w_i$) eines Neurons (NE) eine Prämisse der Regel beschreibt, welche durch das entsprechende Neuron (NE) beschrieben wird,

b) bei dem das Neuronale Netz (NN) trainiert wird (502),
c) bei dem das neue Neuronale Netz (NNN) auf einen neuen Fuzzy-Regelsatz (NFR) abgebildet wird, wobei der neue Fuzzy-Regelsatz (NFR) durch das neue Neuronale Netz (NNN) charakterisiert wird (504),

**dadurch gekennzeichnet, daß**

d) einzelne Gewichte ($w_i$) des Neuronalen Netzes (NN) entfernt oder wiederbelebt werden, wodurch ein neues Neuronales Netz (NNN) gebildet wird (503), in dem einzelne Prämissen der Regeln des Fuzzy-Regelsatzes entfernt bzw. hinzugefügt sind.

2. Verfahren nach Anspruch 1,

- bei dem für das neue Neuronale Netz (NNN) ein Fehler ermittelt wird,
- bei dem für den Fall, daß der Fehler unter einer vorgebbaren Schranke liegt, das Verfahren beendet wird und der neue Fuzzy-Regelsatz (NFR) den optimalen Fuzzy-Regelsatz darstellt, und
- bei dem für den Fall, daß der Fehler über der Schranke liegt, das Verfahren iterativ solange wiederholt wird, bis der Fehler unter der Schranke liegt.

3. Verfahren nach Anspruch 1 oder 2,
bei dem mit den Gewichten ($w_i$) des Neuronalen Netzes (NN) die Prämissen der Regeln ($R_i$) beschrieben werden.

4. Verfahren nach einem der Ansprüche 1 bis 3,
bei dem die Prämissen der Regeln ($R_i$) mit den Gewichten ($w_i$) des Neuronalen Netzes (NN) binär codiert werden.

5. Verfahren nach einem der Ansprüche 1 bis 4,
bei dem zum Trainieren des Neuronalen Netzes (NN) ein Gradientenabstiegsverfahren verwendet wird.

6. Verfahren nach einem der Ansprüche 1 bis 5,
bei dem zum Trainieren des Neuronalen Netzes (NN) ein semantikerhaltender Lernalgorithmus verwendet wird.

7. Vefahren nach einem der Ansprüche 1 bis 6,
bei dem Regeln ($R_i$) des neuen Fuzzy-Regelsatzes (NFR) mit gleicher Semantik zu einer neuen Regel ($R_i$) zusammengefaßt werden, wobei ein Verläßlichkeitswert ($\kappa_i$) der neuen Regel ($R_i$) sich aus der Summe der Verläßlichkeitswerte ($\kappa_i$) der Regeln ($R_i$) ergibt, die zu der neuen Regel ($R_i$) zusammengefaßt werden.

8. Verfahren nach einem der Ansprüche 1 bis 7,
bei dem Aktivierungsfunktionen von Neuronen (NE) des Neuronalen Netzes (NN) jeweils einer Regel ($R_i$) entsprechen.

**Claims**

1. Method for optimizing a predetermined fuzzy rule set, which has any desired number of rules, by means of a computer,

a) in which the fuzzy rule set (FR) is formed by a neural network (NN), in which case

- one neurone (NE) in the neural network (NN) in each case describes a rule in the fuzzy rule set, and
- one weighting ($w_i$) of a neurone (NE) in each case describes a premise of the rule which is described by the corresponding neurone (NE),

b) in which the neural network (NN) is trained (502),
c) in which the new neural network (NNN) is mapped onto a new fuzzy rule set (NFR), with the new fuzzy rule set (NFR) being characterized (504) by the new neural network (NNN),

characterized in that

d) individual weightings ($w_i$) of the neural network (NN) are pruned or are grown, as a result of which a new neural network (NNN) is formed (503), in which individual premises of the rules of the fuzzy rule set are pruned or added.

2. Method according to Claim 1,

   - in which a fault is determined for the new neural network (NNN),
   - in which, in the situation where the fault is below a limit which can be predetermined, the method is ended and the new fuzzy rule set (NFR) represents the optimum fuzzy rule set, and
   - in which, in the situation where the fault is above the limit, the method is repeated iteratively until the fault is below the limit.

3. Method according to Claim 1 or 2,
   in which the premises of the rules ($R_i$) are described by the weightings ($w_i$) of the neural network (NN).

4. Method according to one of Claims 1 to 3,
   in which the premises of the rules ($R_i$) are binary-coded with the weightings ($w_i$) of the neural network (NN).

5. Method according to one of Claims 1 to 4,
   in which a gradient descent method is used for training the neural network (NN).

6. Method according to one of Claims 1 to 5,
   in which a semantics-maintaining learning algorithm is used for training the neural network (NN).

7. Method according to one of Claims 1 to 6,
   in which rules ($R_i$) in the new fuzzy rule set (NFR) are combined using the same semantics to form a new rule ($R_i$), in which case a reliability value ($\kappa_i$) for the new rule ($R_i$) is obtained from the sum of the reliability values ($\kappa_i$) of the rules ($R_i$) which have been combined to form the new rule ($R_i$).

8. Method according to one of Claims 1 to 7,
   in which activation functions of neurones (NE) in the neural network (NN) each correspond to a rule ($R_i$).

**Revendications**

1. Procédé pour l'optimisation d'un ensemble de règles floues prédéterminé, qui comporte un nombre quelconque de règles, par un ordinateur

   a) dans lequel on projette l'ensemble de règles floues (FR) sur un réseau neuronal (NN) (501)

   - à chaque fois, un neurone (NE) du réseau neuronal (NN) décrivant une règle de l'ensemble de règles floues, et
   - à chaque fois, un poids ($w_i$) d'un neurone (NE) décrivant une prémisse de la règle qui est décrite par le neurone (NE) correspondant,

   b) dans lequel on effectue l'apprentissage du réseau neuronal (NN) (502),
   c) dans lequel on projette le nouveau réseau neuronal (NNN) sur un nouvel ensemble de règles floues (NFR), le nouvel ensemble de règles floues (NFR) étant caractérisé par le nouveau réseau neuronal (NNN) (504),

   caractérisé par le fait que
   d) on élimine ou réactive des poids individuels ($w_i$) du réseau neuronal (NN), ce qui forme un nouveau réseau neuronal (NNN) (503) dans lequel des prémisses individuelles des règles de l'ensemble de règles floues sont éliminées ou ajoutées.

2. Procédé selon la revendication 1,

- dans lequel on détermine une erreur pour le nouveau réseau neuronal (NNN),
- dans lequel, pour le cas où l'erreur est inférieure à une limite pouvant être prescrite, on arrête le procédé et le nouvel ensemble de règles floues (NFR) représente l'ensemble de règles floues optimal, et
- dans lequel, pour le cas où l'erreur est supérieure à la limite, on répète le procédé de manière itérative jusqu'à ce que l'erreur soit inférieure à la limite.

3. Procédé selon la revendication 1 ou 2, dans lequel les prémisses des règles ($R_i$) sont décrites avec les poids ($w_i$) du réseau neuronal (NN).

4. Procédé selon l'une des revendications 1 à 3, dans lequel les prémisses des règles ($R_i$) avec les poids ($w_i$) du réseau neuronal (NN) sont codées sous forme binaire.

5. Procédé selon l'une des revendications 1 à 4, dans lequel, pour l'apprentissage du réseau neuronal (NN), on utilise un procédé de diminution de gradient.

6. Procédé selon l'une des revendications 1 à 5, dans lequel, pour l'apprentissage du réseau neuronal (NN), on utilise un procédé d'apprentissage respectant la sémantique.

7. Procédé selon l'une des revendications 1 à 6, dans lequel on regroupe des règles ($R_i$) du nouvel ensemble de règles floues (NFR) ayant la même sémantique pour former une nouvelle règle ($R_i$), une valeur de confiance ($\kappa_i$) de la nouvelle règle ($R_i$) se déduisant de la somme des valeurs de confiance ($\kappa_i$) des règles ($R_i$) qui sont regroupées pour former la nouvelle règle ($R_i$).

8. Procédé selon l'une des revendications 1 à 7, dans lequel des fonctions d'activation de neurones (NE) du réseau neuronal (NN) correspondent à chaque fois à une règle ($R_i$).

FIG 1

R

Regeleingabe → | FR | → | NN |

B

Lernen

Interpretation ← | NFR | ← | NNN |

FIG 2

| Abbildung eines Fuzzy-Regelsatzes auf ein Neuronales Netz | 201 |

| Ermittlung von Testwerten für neuronale Netze unterschiedlicher Topologie, ausgehend von dem Neuronalen Netz | 202 |

| Erstellung einer Liste der Testwerte | 203 |

| Entfernung oder Wiederbelebung von Gewichten und/oder Neuronen, abhängig von den Testwerten | 204 |

| Abbildung eines neuen neuronalen Netzes auf einen neuen Fuzzy-Regelsatz | 205 |

FIG 3

FIG 4

FIG 5

| |
|---|
| Abbildung eines Fuzzy-Regelsatzes auf ein Neuronales Netz | 501 |

↓

| |
|---|
| Trainieren des Neuronalen Netzes | 502 |

↓

| |
|---|
| Entfernen oder Wiederbeleben von Gewichten und/oder Neuronen | 503 |

↓

| |
|---|
| Abbildung eines neuen neuronalen Netzes auf einen neuen Fuzzy-Regelsatz | 504 |

FIG 6

DR

BS

R

MA

TA